# EUROPEAN PATENT SPECIFICATION

(11) **EP 2 720 835 B1**
(45) Date of publication and mention of the grant of the patent: **12.08.2015**
(21) Application number: 12730681.9
(22) Date of filing: 12.06.2012
(51) Int. Cl.: B25J 9/10

(54) **MANIPULATOR COMPRISING A FIXED BASE AND A MOVABLE PLATFORM, WITH FOUR MOTOR-DRIVEN CHAINS OF ARTICULATED LINKS**
MANIPULATOR MIT EINER UNBEWEGLICHEN BASIS UND EINER BEWEGLICHEN PLATTFORM MIT VIER MOTORBETRIEBENEN KETTEN AUS GELENKGLIEDERN
DISPOSITIF DE MANIPULATION COMPRENANT UNE BASE FIXE ET UNE PLATE-FORME MOBILE, DOTÉ DE QUATRE CHAÎNES D'ENTRAÎNEMENT DE MOTEUR À MAILLONS ARTICULÉS

(30) Priority: 17.06.2011 NL 2006960
(43) Date of publication of application: 23.04.2014
(73) Proprietor: Universiteit Twente, 7522 NB Enschede (NL); CNRS, 75794 Paris Cedex 16 (FR); Université Montpellier 2, 34095 Montpellier Cedex 5 (FR)
(72) Inventor: VAN DER WIJK, Volkert, NL-7522 DG Enschede (NL); KRUT, Sébastien Christophe, F-34080 Montpellier (FR); PIERROT, François, F-34430 Saint-Jean-De-Védas (FR); HERDER, Justus Laurens, NL-2595 ED Den Haag (NL)
(74) Representative: Verhees, Godefridus Josephus Maria
(86) International application number: PCT/NL2012/050409
(87) International publication number: WO 2012/173471

(56) References cited:
- US-A- 5 673 595
- US-A- 6 047 610
- BOQIANG XU ET AL: "Workspace analysis of the 4RRR planar parallel manipulator with actuation redundancy", TSINGHUA SCIENCE AND TECHNOLOGY, vol. 15, no. 5, 1 October 2010 (2010-10-01), pages 509-516, XP011375793, TSINGHUA UNIVERSITY PRESS, BEIJING, CN ISSN: 1007-0214, DOI: 10.1109/TST.2010.6076154 cited in the application
- VALASEK M ET AL: "Evaluation of dynamic capabilities of machines and robots", MULTIBODY SYSTEM DYNAMICS, vol. 6, no. 2, September 2001 (2001-09), pages 183-202, XP002667704, KLUWER ACADEMIC PUBLISHERS NETHERLANDS ISSN: 1384-5640

## Description

The invention relates to a manipulator comprising a fixed base and a movable platform, wherein there are four motor-driven chains of articulated links that connect the base to the movable platform, and wherein each chain has two links.

Such a manipulator is known from the article 'Workspace Analysis of the 4RRR Planar Parallel Manipulator with Actuation Redundancy' by XU Boqiang et al, published in Tsinghua Science and Technology, ISSN 1007-0214 04/17 pages 509-516, Volume 15, Nr 5, October 2010.

This known manipulator is proposed in connection with the large reachable workspace that it provides.

It is an object of the invention to improve the balancing properties of the known manipulator. Generally speaking it is a further object to provide an alternative for the known manipulator which is easier to control.

The manipulator of the invention is to this end provided with one or more of the features of the appended claims.

In a first aspect of the invention the platform is movable in a plane with a predefined orientation in said plane, whereby in every position of the platform in the plane, said platform divides the plane in a left portion that is located left of the platform and in a right portion that is located right of the platform, and that there are two motor-driven chains in the said left portion and two motor-driven chains in the said right portion, wherein the chains in the left portion comprise upper links and lower links that are in every position of the platform parallel in pairs, and wherein the chains in the right portion comprise upper links and lower links that are likewise in every position of the platform parallel in pairs. By this arrangement a degree of symmetry is provided to the platform which makes the balancing of the chains of links that connect the platform to the base relatively easy. Balancing of the links and (a portion of) the platform can then simply be carried out by a single countermass for each chain of links. The links themselves may, however, have different lengths, and also the position of the motor-drives can be varied.

One of the further preferred features of the manipulator of the invention is that each of the motor-driven chains of links has its motor positioned at a far side of the platform, and that for each chain one link thereof that is on the far side of the motor, connects this chain of links to the platform. This is a further aspect that contributes to the beforementioned degree of symmetry of the manipulator of the invention.

The inventors have found it possible that the platform is provided with one, two, three, or four hinges connecting the four motor-driven chains of articulated links to the platform, without compromising the balancing properties of the manipulator of the invention.

It is further preferable that each of the four motor-driven chains of links has a fixed point of rotation at the base and that at the location of each such fixed point of rotation the concerning chain is provided with a balancing countermass.

The invention will hereinafter be further elucidated with reference to the drawing of an exemplary embodiment of the manipulator of the invention, that is not limiting with respect to the appended claims.

In the drawing:
- figure 1A provides an isometric view of the manipulator of the invention;
- figure 1B provides a top view of the manipulator shown in figure 1A;
- figure 2 provides a top view of the manipulator of the invention with the platform moved to the right on a horizontal symmetry axis;
- figure 3 provides a top view of the manipulator of the invention with the platform moved upwards along a vertical symmetry axis;
- figure 4 provides a top view of the manipulator of the invention with the platform moved out of center to the right and upwards; and
- figure 5 provides a top view of the manipulator of the invention with links that are not exactly parallel.

Wherever in the figures the same reference numerals are applied, these numerals refer to the same parts.

With reference to all figures the manipulator 1 of the invention is shown to comprise a movable platform 2 and a fixed base (not shown). There are four motor-driven chains 3, 4, 5, 6 of articulated links 3', 3", 4', 4", 5', 5", 6', 6" that connect the (not shown) base to the movable platform 2. Each chain 3, 4, 5, 6 has two links, and the platform 2 is movable in a plane with a predefined orientation, which is preferably although not necessarily a fixed angular orientation in said plane 2.

Further in every position that the platform 2 assumes in the plane, said platform 2 divides the plane in a left portion 2' that is located left of the platform 2 and in a right portion 2" that is located right of the platform 2. There are two motor-driven chains 3, 4 in the said left portion 2' and two motor-driven chains 5, 6 in the said right portion 2", and the chains 3, 4 in the left portion 2' comprise upper links 3', 3" and lower links 4', 4" that are in every position of the platform 2 parallel in pairs. This means that upper link 3' is parallel to lower link 4", and upper link 3" is parallel to lower link 4'. Likewise the chains in the right portion 2" comprise upper links 5', 5" and lower links 6', 6" that are also in every position of the platform 2 parallel in pairs. This means that upper link 5' is parallel to lower link 6", and upper link 5" is parallel to lower link 6'.

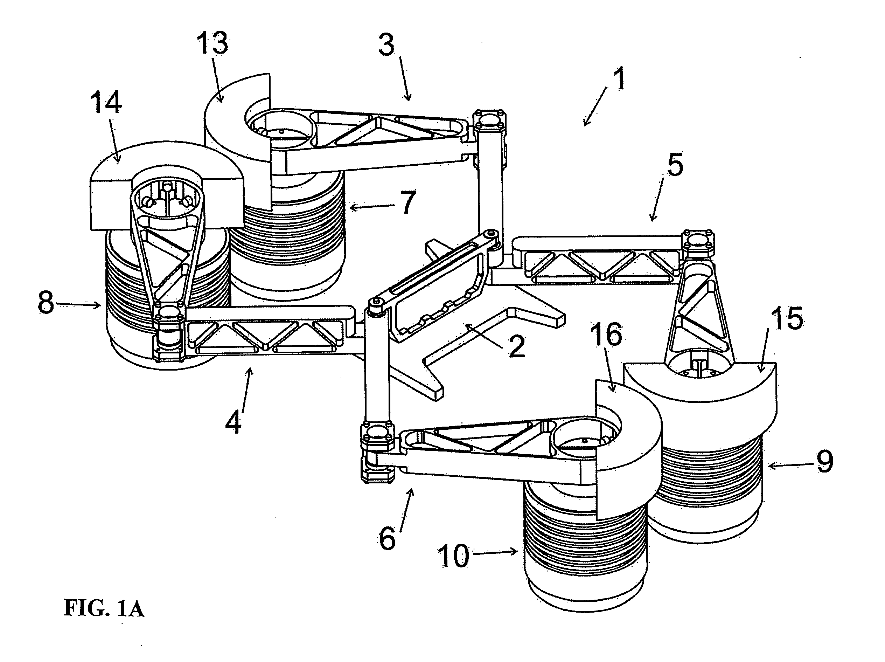

In figure 1A it is shown that each of the motor-driven chains 3, 4, 5, 6 of links has its motor 7, 8, 9, 10 positioned at a far side of the platform 2, and that for each chain 3, 4, 5, 6 one link 3", 4", 5", 6" thereof that is on the far side of the motor 7, 8, 9, 10 connects the concerning chain 3, 4, 5, 6 of links to the platform 2.

It is further remarked to be possible without compromising the properties of the manipulator of the invention that the platform 2 is provided with one, two, three, or four hinges connecting the four motor-driven chains 3, 4, 5, 6 of articulated links to the platform 2. All figures however show that in this particular embodiment it is elected to apply only two of such hinges 11, 12. In this case hinge 11 is shared by the upper links 3", 5" of the chains 3, 5 of articulated links, and hinge 12 is shared by the lower links 4", 6" of the chains 4, 6 of articulated links.

It is still further remarked that each of the four motor-driven chains 3, 4, 5, 6 of links has a fixed point of rotation at the base. The figures further show that at the location of each such fixed point of rotation the concerning chain 3, 4, 5, 6 can be provided with a balancing countermass 13, 14, 15, 16.

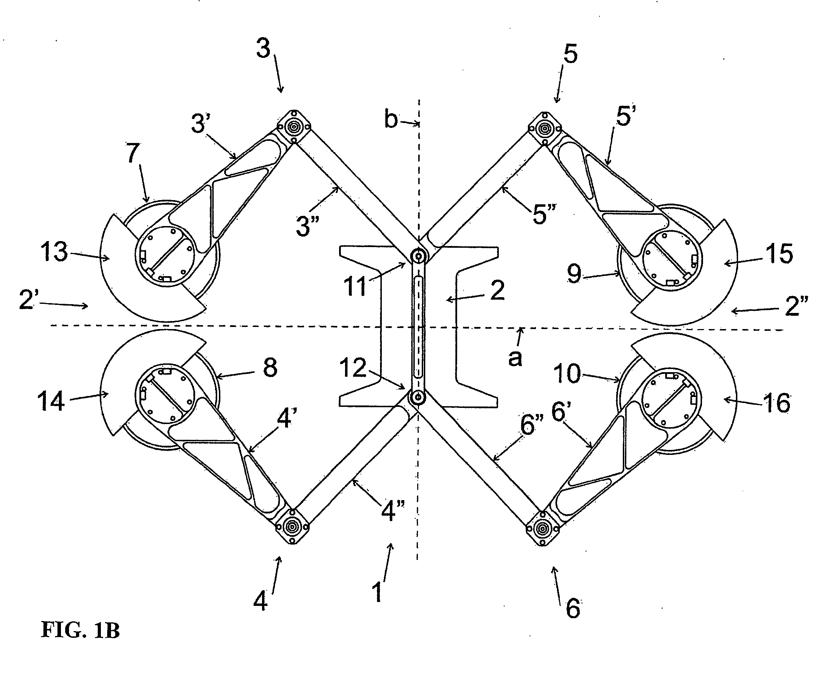

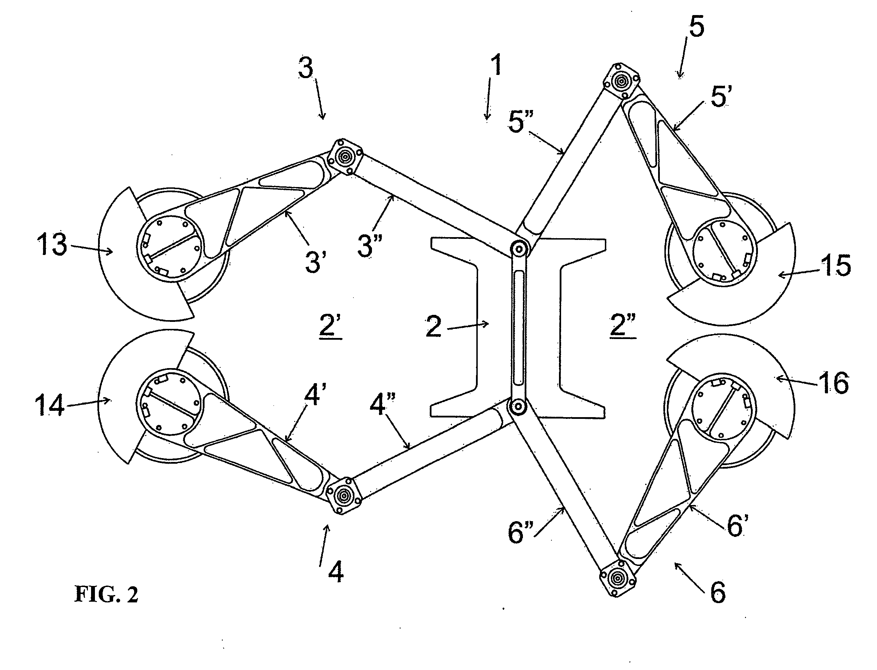

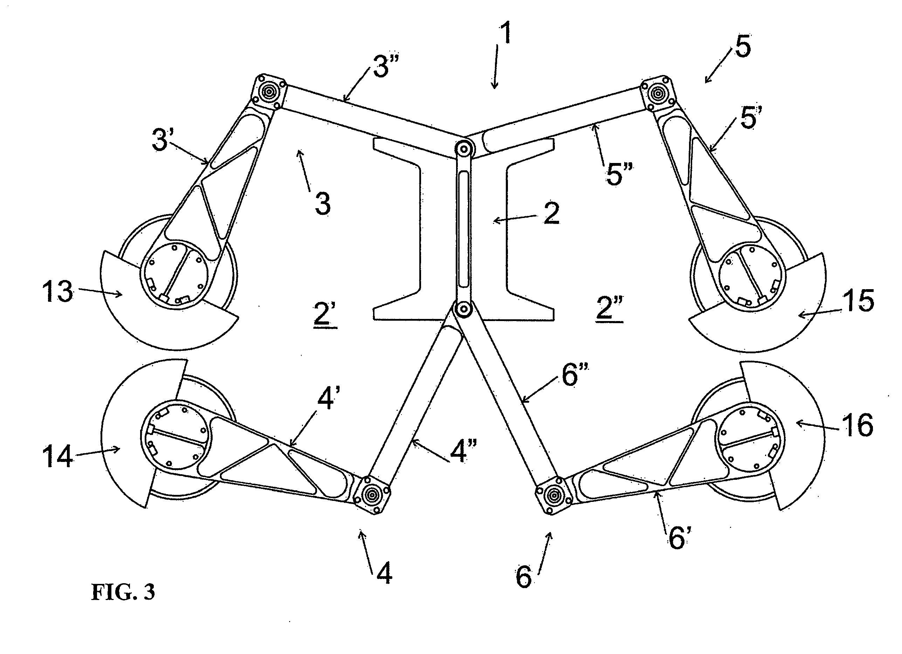

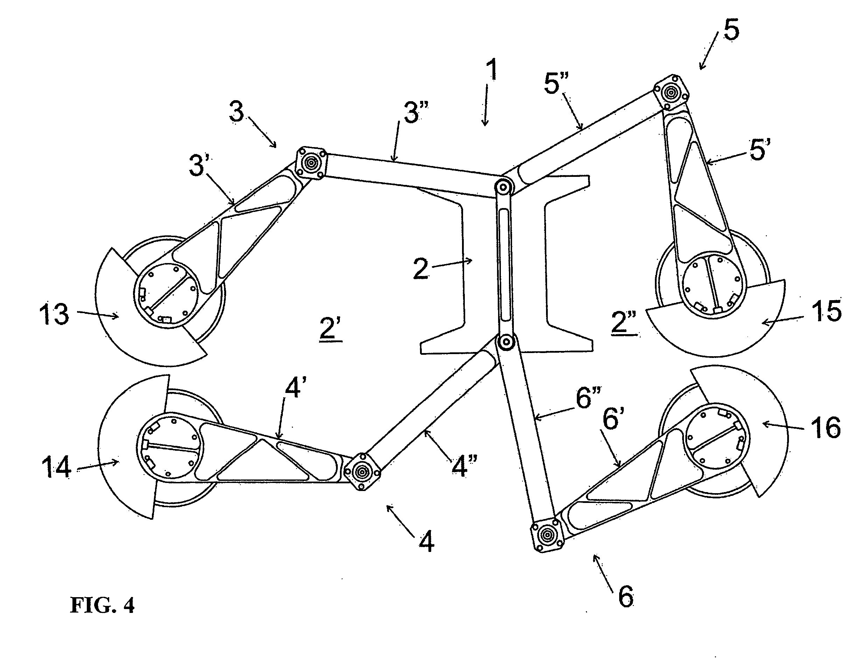

The manipulator 1 of the invention as explained with reference to the drawing is very easy to manipulate and it is provided with an extended reach of usable workspace which may be apparent from a comparison of the figures 2, 3 and 4 showing respectively the platform 2 moved to the right on a horizontal axis of symmetry of the manipulator (see dotted line a in figure 1B); the platform 2 moved upwards along a vertical axis of symmetry of the manipulator (see dotted line b in figure 1B); and the platform 2 moved out of center to the right and upwards.

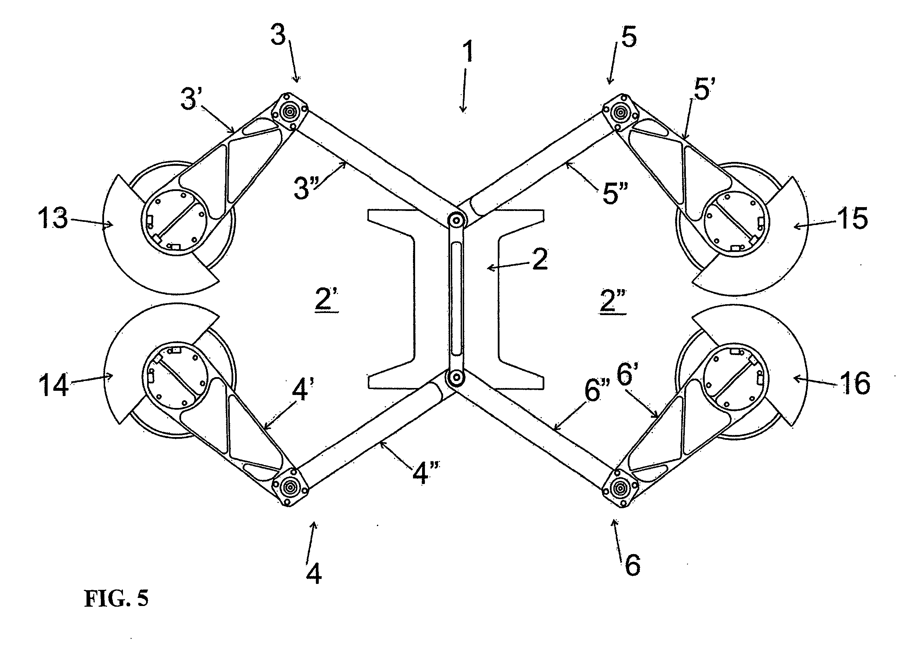

Finally figure 5 shows an embodiment of the manipulator 1 of the invention having links that are not exactly parallel, by which it is nevertheless still possible to provide an appreciable force- and moment-balanced behavior. A slight rotation of the platform is thus allowed without losing this force-and moment-balanced behavior.

## Claims

1. Manipulator (1) comprising a fixed base and a movable platform (2), wherein there are four motor-driven chains (3, 4, 5, 6) of articulated links (3', 3", 4', 4", 5', 5", 6', 6") that connect the base to the movable platform (2), and wherein each chain (3, 4, 5, 6) has two links, **characterized in that** the platform (2) is movable in a plane with a predefined orientation in said plane and that in every position of the platform (2) in the plane, said platform (2) divides the plane in a left portion (2') that is located left of the platform (2) and in a right portion (2") that is located right of the platform (2), and that there are two motor-driven chains (3, 4) in the said left portion (2') and two motor-driven chains (5, 6) in the said right portion (2"), wherein the chains (3, 4) in the left portion (2') comprise upper links (3', 3") and lower links (4", 4') that are in every position of the platform (2) parallel in pairs, and wherein the chains (5, 6) in the right portion (2") comprise upper links (5', 5") and lower links (6", 6') that are in every position of the platform (2) parallel in pairs.

2. Manipulator according to claim 1, **characterized in that** each of the motor-driven chains (3, 4, 5, 6) of links has its motor positioned at a far side of the platform (2), and that for each chain one link (3", 4", 5", 6") thereof that is on the far side of the motor (7, 8, 9, 10), connects this chain (3, 4, 5, 6) of links to the platform (2).

3. Manipulator according to claim 1 or 2, **characterized in that** the platform (2) is provided with one, two, three, or four hinges (11, 12) connecting the four motor-driven chains (3, 4, 5, 6) of articulated links to the platform (2).

4. Manipulator according to any one of the previous claims, **characterized in that** each of the four motor-driven chains (3, 4, 5, 6) of links has a fixed point of rotation at the base and that at the location of each such fixed point of rotation the concerning chain is provided with a balancing countermass (13, 14, 15, 16).

## Patentansprüche

1. Manipulator (1), bestehend aus einem unbeweglichen Unterbau und einer beweglichen Plattform (2), der mit vier motorisch angetriebenen Armen (3, 4, 5, 6) aus gelenkig verbundenen Gliedern (3', 3", 4', 4", 5', 5", 6', 6") versehen ist, welche den Unterbau und die bewegliche Plattform (2) miteinander verbinden, wobei jeder Arm (3, 4, 5, 6) zwei Glieder besitzt, **dadurch gekennzeichnet, dass** die Plattform (2) in einer Ebene beweglich ist und sich in der genannten Ebene mit einer zuvor festgelegten Ausrichtung bewegen lässt, und dass die Ebene von der erwähnten Plattform (2) in jeder Position der Plattform (2) innerhalb der Ebene in einen linken Teil (2') geteilt wird, der sich links von der Plattform (2) befindet, sowie in einen rechten Teil (2"), der sich rechts von der Plattform (2) befindet, und dass ferner zwei motorisch angetriebene Arme (3, 4) in dem erwähnten linken Teil (2') sowie zwei motorisch angetriebene Arme (5, 6) in dem erwähnten rechten Teil (2") angeordnet sind, wobei die Arme (3, 4) im linken Teil (2') höher liegende Glieder (3', 3") und tiefer liegende Glieder (4", 4') aufweisen, die in jeder Stellung der Plattform (2) paarweise parallel zueinander angeordnet sind, und die Arme (5, 6) im rechten Teil (2") höher liegende Glieder (5', 5") und tiefer liegende Glieder (6", 6') aufweisen, die in jeder Stellung der Plattform (2) paarweise parallel zueinander angeordnet sind.

2. Manipulator nach Anspruch 1, **dadurch gekennzeichnet, dass** bei jedem der motorisch angetriebenen mehrgliedrigen Arme (3, 4, 5, 6) der Antriebsmotor und die Plattform (2) am jeweils gegenüberliegenden Ende des Arms angeordnet sind und dass jeweils ein Glied (3", 4", 5", 6") eines jeden Arms, das sich auf der dem Motor (7, 8, 9, 10) gegenüberliegenden Seite befindet, die Verbindung zwischen dem betreffenden mehrgliedrigen Arm (3, 4, 5, 6) und der Plattform (2) bildet.

3. Manipulator nach einem der Ansprüche 1 oder 2, **dadurch gekennzeichnet, dass** die Plattform (2) mit einem, zwei, drei oder vier Drehgelenken (11, 12) versehen ist, welche die vier motorisch angetriebenen Arme (3, 4, 5, 6) aus gelenkig verbundenen Gliedern mit der Plattform (2) verbinden.

4. Manipulator nach einem der vorangegangenen Ansprüche, **dadurch gekennzeichnet, dass** jeder der vier motorisch angetriebenen mehrgliedrigen Arme (3, 4, 5, 6) am Unterbau einen festen Drehpunkt besitzt und der jeweilige Arm dort, wo sich die erwähnten festen Drehpunkte befinden, mit einem Ausgleichsgewicht (13, 14, 15, 16) versehen ist.

## Revendications

1. Manipulateur (1) comprenant une base fixe et une plateforme mobile (2), où sont pourvus quatre bras motorisés (3, 4, 5, 6) faits de pièces d'assemblage articulées (3', 3", 4', 4", 5', 5", 6', 6") qui relient la base à la plateforme mobile (2), et où chaque bras (3, 4, 5, 6) dispose de deux pièces d'assemblage, **caractérisé en ce que** la plateforme (2) est mobile dans un plan avec une orientation définie à l'avance dans ledit plan et ceci dans chaque position de la plateforme (2) dans le plan, et **en ce que** ladite plateforme (2) divise le plan en une partie gauche (2') se trouvant à gauche de la plateforme (2) et en une partie droite (2") se trouvant à droite de la plateforme (2), et **en ce qu'**il y a deux bras motorisés (3, 4) dans ladite partie gauche (2') et deux bras motorisés (5, 6) dans ladite partie droite (2"), où les bras (3, 4) dans la partie gauche (2') disposent de pièces d'assemblage articulées supérieures (3', 3") et de pièces d'assemblage articulées inférieures (4", 4') qui sont parallèles deux par deux dans chaque position de la plateforme (2), et où les bras (5, 6) dans la partie droite (2") comprennent des pièces d'assemblage articulées supérieures (5', 5") et des pièces d'assemblage articulées inférieures (6", 6') qui sont parallèles deux par deux dans chaque position de la plateforme (2).

2. Manipulateur selon la revendication 1, **caractérisé en ce que** pour chacun des bras motorisés (3, 4, 5, 6) faits de pièces d'assemblage, le moteur est positionné sur un côté éloigné de la plateforme (2), et **en ce que** pour chaque bras, une de ses pièces d'assemblage (3", 4", 5", 6") se trouvant sur le côté éloigné du moteur (7, 8, 9, 10) relie à la plateforme (2) ce bras (3, 4, 5, 6) faits de pièces d'assemblage.

3. Manipulateur selon la revendication 1 ou 2, **caractérisé en ce que** la plateforme (2) est pourvue d'une, deux, trois ou quatre charnières (11, 12) reliant à la plateforme (2) les quatre bras motorisés (3, 4, 5, 6) faits de pièces d'assemblage articulées.

4. Manipulateur selon une des revendications précédentes, **caractérisé en ce que** chacun des quatre bras motorisés (3, 4, 5, 6) faits de pièces d'assemblage dispose d'un point de rotation fixe sur la base et **en ce qu'**à l'emplacement de chacun desdits points de rotation fixes, le bras concerné est pourvu d'un contrepoids d'équilibre (13, 14, 15, 16).
